# EUROPEAN PATENT SPECIFICATION

(11) **EP 1 522 519 B1**
(45) Date of publication and mention of the grant of the patent: **31.05.2017**
(21) Application number: 02749302.2
(22) Date of filing: 17.07.2002
(51) Int. Cl.: B66B 1/30, B66B 11/00

(54) **ELEVATOR APPARATUS**
AUFZUGSVORRICHTUNG
ASCENSEUR

(43) Date of publication of application: 13.04.2005
(73) Proprietor: MITSUBISHI DENKI KABUSHIKI KAISHA, Chiyoda-ku Tokyo 100-8310 (JP)
(72) Inventor: BANNO, Hirokazu, Chiyoda-ku, Tokyo 100-8310 (JP)
(74) Representative: Hoffmann Eitle
(86) International application number: PCT/JP2002/007246
(87) International publication number: WO 2004/007332

(56) References cited:
- EP-A2- 1 106 559
- WO-A1-00/39014
- JP-A- 2000 044 146
- JP-A- 2000 272 860
- JP-A- 2001 240 324
- JP-A- 2002 145 539
- US-A1- 2001 017 240

## Description

### Technical Field

The present invention relates to an energy-saving elevator system using a power storage device by secondary batteries etc.

### Background Art

Recent years have seen the widespread use of elevators which do not need a machine room, for example, elevators which have no machine room and in which a hoisting machine and a control panel are provided within a shaft. Usually, an elevator is provided with a power storage device which stores DC power during its regenerative running, and supplies power during its power running. However, in what is called machineroom-less elevators, the space for mounting a power storage device poses a problem, and for instance, there has been shown examples in which secondary batteries used in a power storage device are stacked in layer long in a corner of a shaft. One Example can be see in US2001/0017240. However, an elevator system which is constructed so as to facilitate handling and maintenance while compactly arranging a large number of secondary cells and installing a power storage device including the secondary batteries in a space-saving manner, has not been supplied as yet.

That is, for a power storage device using secondary batteries etc., in what part of the elevator system the power storage device should be arranged has been a problem in machineroom-less elevators for which the shaft space is narrow.

Also, in a power storage device using secondary batteries, in general, there is an appropriate temperature range of good charging/discharging efficiency and, therefore, cooling by simple means to this temperature range and blowing air more efficiently have posed problems.

The present invention has as its object the provision of an elevator system in which a power storage device, such as that of secondary batteries, is appropriately arranged without impairing the space-saving merit of machine-room-less elevators after solving problems as described above. Also, the invention has as its object the provision of an elevator system which, as a result of this, facilitates reduction of cables to a power storage device and the maintenance and inspection of the cables.

Furthermore, the invention has as its object the provision of an elevator system in which a power storage device using secondary batteries etc. can be efficiently cooled with noise abated as far as possible, as required in machineroom-less elevators. In other words, the invention has as its object the provision of an elevator system which comprises air blowing means for efficiently blowing air to a power storage device thereby to cool it.

### Disclosure of the Invention

An elevator system of the invention comprises a control panel including a converter, which rectifies AC power, converts the AC power to DC power and outputs the DC power to a DC bus, and an inverter, which is connected to the DC bus and converts the DC power to variable voltage variable frequency AC power, and operates an elevator car by driving an electric motor by an output of the inverter. This elevator system comprises a power storage device which supplies and receives power to and from a DC bus.

This power storage device includes a power storage part which stores power from the DC bus and discharges power to the DC bus, a charging/discharging circuit part which is connected between the DC bus and the power storage part, a measuring part which measures at least one kind selected from a temperature of the power storage part or an input/output current or voltage thereof, and a charging/discharging control part which controls the charging/discharging of the power storage part by controlling the charging/discharging circuit part according to an output of the measuring part. This power storage device is disposed within an elevator shaft.

Also, the elevator system of the invention comprises a control panel and a power storage device as described above, and the power storage device includes a power storage part, a charging/discharging circuit part, a measuring part and a charging/discharging control part. The control panel is provided within an elevator shaft, and at the same time, the power storage device or at least the power storage part among the power storage part, charging/discharging circuit part, measuring part and charging/discharging control part of the power storage device is formed integrally with the control panel and provided within the elevator shaft.

Also, the elevator system of the disclosure comprises a control panel and a power storage device as described above, and the power storage device includes a power storage part, a charging/discharging circuit part, a measuring part and a charging/discharging control part. The control panel is provided within an elevator shaft, and at the same time, the power storage device or at least one of the power storage part, charging/discharging circuit part, measuring part and charging/discharging control part of the power storage device is formed separately from the control panel and provided in the vicinity of the control panel or within a pit of the elevator shaft. Also, preferably, the power storage device or at least one of the power storage part, charging/discharging circuit part, measuring part and charging/discharging control part of the power storage device is provided immediately above or immediately under the control panel.

Furthermore, the elevator system in the present disclosure comprises a control panel including: a converter for rectifying, converting to DC power and outputting the DC power to a DC bus; and an inverter connected to the DC bus and converting the DC power to variable voltage variable frequency AC power, and operating and elevator car by driving an electric motor by an output of the inverter. Moreover, the power storage device comprises a power storage part to store power from the DC bus and to discharge power to the DC bus, a charging/discharging circuit part connected between the DC bus and the power storage part, a measuring part for measuring at least one kind selected from a temperature of the power storage part or an input/output current or voltage thereof, a charging/discharging control part to control the charging/discharging circuit part according to the output of the measuring part, and an air blowing part for blowing air to the power storage part. Further, the power storage device is arranged within the elevator shaft.

Moreover, the elevator system in the present disclosure comprises a control panel and a power storage device as described above, and the power storage device includes a power storage part, a measuring part, a charging/discharging control part, and an air blowing part. The control panel is provided within the elevator shaft and the storage device or at least one of the power storage part, the charging/discharging circuit part, the measuring part and the charging/discharging control part of the power storage device, and the air blowing part is provided integrally with the control panel in the shaft.

Further, the elevator system in the present invention includes a plurality of power storage modules in which a plurality of power storage cells are electrically connected and laminated and is constituted by a power storage unit in which a plurality of the power storage modules are arranged in parallel and electrically connected.

Preferably, in the elevator system in the present invention, the power storage part of the power storage device is constituted by the power storage unit the number of which is one or a plurality of the power storage units connected.

Preferably, the power storage unit is constituted by a plurality of the power storage modules which are horizontally arranged in a checker pattern or in a zigzag pattern.

Preferably, in the power storage unit, a horizontal ventilation passage is uniformized by arranging the power storage modules along with dummies.

Preferably, in the power storage unit, an air blowing device which blows air to the power storage modules is disposed in the vicinity of the power storage modules at a prescribed distance therefrom.

Preferably, the power storage unit comprises a power transmission member which an take out the power of a plurality of the power storage modules electrically connected to outside the power storage unit.

Preferably, the power storage unit comprises an information transmission member to transmit information on the temperature or voltage of the power storage modules.

Preferably, the power storage unit comprises a base plate which supports the power storage modules and uses this base plate as the power transmission member or the information transmission member.

Preferably, the power storage unit comprises a supporting member which supports a plurality of power storage modules.

According to the present invention as described above, space savings can be achieved by disposing, in an elevator system, a power storage part which performs the storage and discharge of DC power or at least its component parts in an appropriate position within a shaft. Also, cables connected to the power storage device can be reduced in short lengths, and at the same time, maintenance and inspection become easy. Furthermore, by unitizing the power storage part of the power storage device, the transportation, maintenance, inspection and replacement of the power storage part can be easily carried out. Also, it becomes possible to combine a plurality of units.

### Brief Description of the Drawings

Figures 1(A) and 1(B) are arrangement examples of an elevator system in accordance with the first embodiment of the present invention.
Figure 2 is a drawing explaining a control device and a circuit structure of a power storage device of an elevator.
Figures 3(A) and 3(B) are arrangement examples of an elevator system accoridng to the prior art.
Figure 4 is a cross-sectional view showing a schematic structure of a multiple panel including a control device and a power storage device of an elevator in accordance with the first embodiment of the present invention.
Figures 5(A) and 5(B) are drawings showing batteries used in the present invention.
Figure 6 is a drawing showing an arrangement example of modules in a power storage part.
Figures 7(A), 7(B) and 7(C) are drawings showing various arrangement examples of modules in a power storage part.
Figures 8(A) and 8(B) are drawings showing further arrangement examples of modules in a power storage part.
Figures 9(A), 9(B) and 9(C) are drawings showing the structure of power storage units used in a power storage part in accordance with the fourth embodiment of the present invention.
Figure 10 is a plan view showing a support plate as an example of a supporting member.
Figure 11 is a drawing explaining an example of a structure of an electric circuit of a power storage unit.

### Best Mode for Carrying out the Invention

The present invention will be described in detail according to the accompanying drawings.

### Embodiment 1

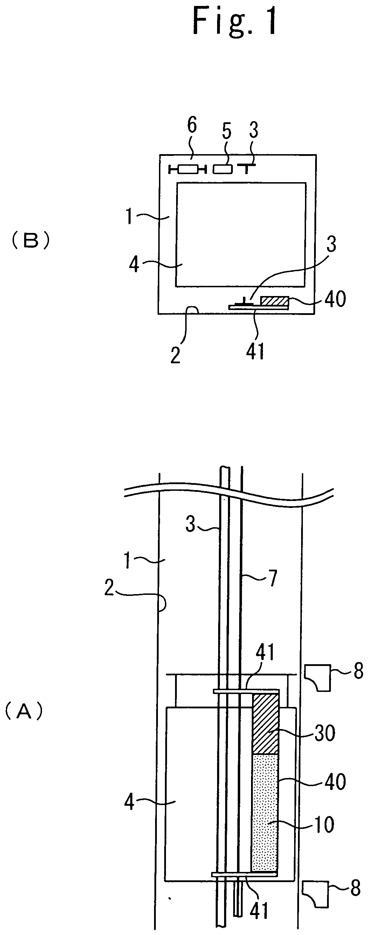

Figures 1(A) and 1(B) are views showing an example of an arrangement of an elevator system according to Embodiment 1 of the invention. Figure 1(A) is a partial elevation of the elevator system as viewed from the horizontal direction, and Figure 1(B) is a plan view of the elevator system as viewed from above, each being a conceptual diagram of essential parts of the elevator system.

In Figures 1(A) and 1(B), numeral 1 denotes an elevator shaft in which an elevator car ascends and descends, numeral 2 a wall surface of the shaft, numeral 3 a pair of guide rails arranged along opposing wall surfaces of the shaft 1, numeral 4 an elevator car which ascends and descends within the shaft 1 by being guided by the guide rails, numeral 5 a hoisting machine of the elevator car 4, and numeral 6 a counter weight. Also, numeral 7 denotes a main rope, an end of which is fixed to a top part of the shaft 1, a middle part of which is wound by the hoisting machine 5 and a pulley below the elevator car 4, and the other end of which is connected to the counter weight 6, though omitted in the figures, with the result that the main rope causes the elevator car 4 to ascend and descend by the rotation of the hoisting machine 5. Numeral 8 denotes a floor.

Next, numeral 10 denotes an elevator control device, numeral 30 a power storage device which stores power for driving the hoisting machine, and numeral 40 a multiple panel in which the control device 10 and the power storage device 30 are integrally formed. The numeral 41 denotes a pair of mounting arms. Each of the mounting arms is fixed to the guide rail 3 at an end, extends in a horizontal direction from the guide rail 3 along the shaft wall surface 2, and fixes the top and bottom ends of the multiple panel 40 at its tail ends. In this manner, the multiple panel 40 is disposed in a gap between the shaft wall surface 2 and the elevator car 4, and is attached to the guide rail 3 so as not to take up a special installation space.

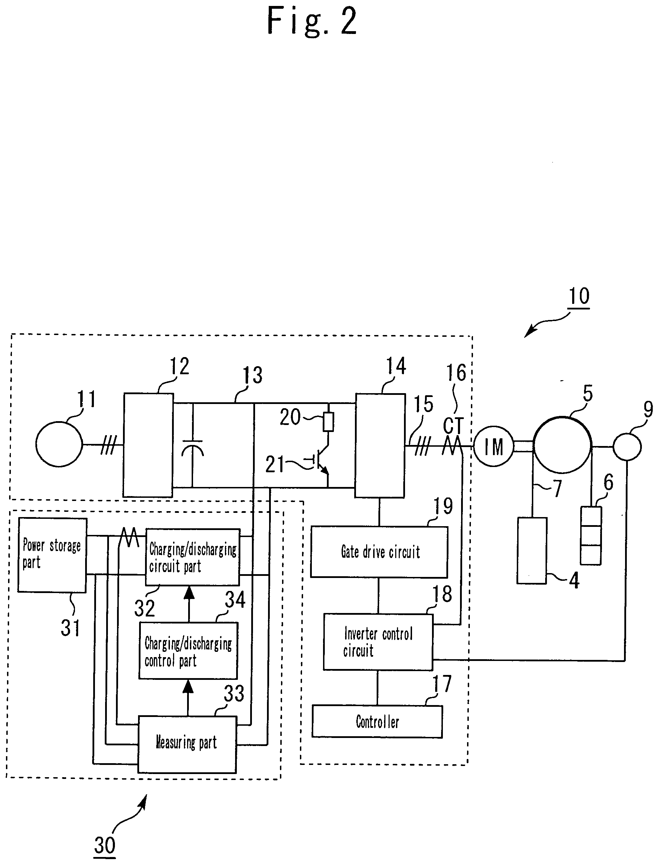

Figure 2 is a diagram to explain an example of a circuit configuration of the elevator control device 10 and power storage device 30.

In Figure 2, the right end portion shows the hardware part of the elevator system shown in Figures 1(A) and 1(B). It is shown that the hoisting machine 5 is driven by an induction motor IM and drives the main rope 7 wound around the hoisting machine 5 thereby to cause the car 4 and the counter weight 6 which are connected to both ends of the main rope 7 to ascend and descend. Numeral 9 denotes an encoder.

In the control device 10, numeral 11 denotes a three-phase AC power source, numeral 12 a converter connected to the three-phase AC power source, and numeral 13 a DC bus 13 connected to an output circuit of the converter. The converter 12 performs the AC-DC conversion of three-phase AC power and outputs DC power to the DC bus 13.

Numeral 14 denotes an inverter connected to the DC bus 13, numeral 15 an AC output line, and numeral 16 a CT of the AC output line 15. The inverter 14 performs the DC-AC conversion of a DC input from the DC bus 13 and outputs AC power to an AC output line 15. Numeral 17 denotes a controller, numeral 18 an inverter control circuit, and numeral 19 a gate drive circuit. The inverter control circuit 18 receives input signals from the encoder 9 and the CT 16, and controls the gate drive circuit 19. Numeral 20 denotes a regenerative resistor and numeral 21 a regenerative resistor control circuit.

Next, in the power storage device 30, numeral 31 denotes a power storage part, numeral 32 a charging/discharging circuit part connected between a power storage part 31 and a DC bus 13, numeral 33 a measuring part which measures the condition of the power storage part 31 and generates control signals, and numeral 34 a charging/discharging control part which receives control signals from the measuring part 33 and controls the charging/discharging circuit part 32.

More specifically, the power storage part 31 obtains DC power from the DC bus 13 and stores the DC power or discharges DC power to the DC bus 13. The charging/discharging circuit part 32 is connected between the DC bus 13 and the power storage part 31 and performs the charging/discharging of the power storage part 31. The measuring part 33 measures at least one kind selected from a temperature of the power storage part 31 or an output/input current or voltage thereof. The measuring part 33 is also connected to the DC bus 13, and measures its voltage. The charging/discharging control part 34 controls the charging/discharging of the power storage part 31 by controlling the charging/discharging circuit part 32 according to an output of the measuring part 33.

This power storage device 30 serves to store DC power from the DC bus 13 during the regenerative running of an elevator system, and to supply the stored DC power to the DC bus 13 during power running. In an elevator system, in a case where the car 4 loaded with a prescribed number of passengers is caused to ascend and descend, regenerative running is performed during a descent of the car 4, and power running is performed during an ascent thereof. In a case where the car 4 is caused to ascend and descend without a load, power running is performed during a descent of the car 4, and regenerative running is performed during an ascent thereof. Examples of circuit configuration of such a power storage device and its operation have already been known and are also described, for example, in Japanese unexamined laid-open patent publications Nos. P2001-240323A, P2001-240324A, etc. Therefore, detailed descriptions are omitted here.

As described above, in the elevator system of this embodiment, the power storage device 30 is integrally built in the control panel which houses the control device 10 to form the multiple panel 40. That is, by designing the control panel which houses the control device 10 so as to extend in the ascending/descending direction, the power storage device 30 is installed within the control panel. In this manner, by forming the power storage device 30 integrally with the control panel of the control device 10, it is possible to design wiring cables between the two so as to have short lengths and hence to improve the space efficiency.

Machineroom-less elevator systems have hitherto been designed so as to save space to a great extent as shown in Figures 1(A) and 1(B), and as in the present invention, in an elevator in which the power storage device 30 which stores DC power, such as secondary batteries, is added to a conventional elevator control panel, it is important that the newly added power storage device 30 be installed without wasting space.

In order to effectively utilize the shaft space and to prevent flood damage, a control panel applied to present machineroom-less elevators is installed, for example, above the floor level of the lowest floor, and that the control panel is designed so as to be of a thin model for use in a space between the car room and the wall and be long in the ascending/descending direction. And in many cases, other equipment is not installed in this ascending/descending direction. Therefore, in an elevator system in which the power storage device 30 is added, it is possible to install the power storage device 30, concretely, equipment such as the power storage part 31, the charging/discharging circuit part 32 to perform charging/discharging to and from the power storage device, and the charging/discharging control part 34 to control this charging/discharging circuit part 32, which are component elements of the power storage device 30, within the control panel by designing a conventional control panel so as to extend in the ascending/descending direction.

As described above, according to this embodiment, in an elevator control device provided with a power storage device which stores DC power, it is possible to install the power storage device without wasteful space and, at the same time, it is possible to install the power storage device in a space where maintenance and inspection can be efficiently carried out.

Next, an example of variation of this embodiment will be described. In this embodiment, as shown in Figures 1(A) and 1(B), the description was given of the case where all of the component parts of the power storage device 30 shown in Figure 2, the power storage part 31, the charging/discharging circuit part 32, the measuring part 33 and the charging/discharging control part 34, which are integral with the control device 10, are built in the multiple panel 40 as one piece.

However, even if all of the component parts of the power storage device 30 are not integral with the control device 10, also in a case where at least one of the power storage part 31, charging/discharging circuit part 32, measuring part 33 and charging/discharging control part 34, or some of them are formed integrally with the control device 10 according to condition and necessity, the present invention is meaningful seeing that space savings can be achieved in the installation of these equipment parts. In this case, component parts which are formed not integrally with the control device 10 may be arranged as separate bodies within the shaft 1 or outside the shaft 1.

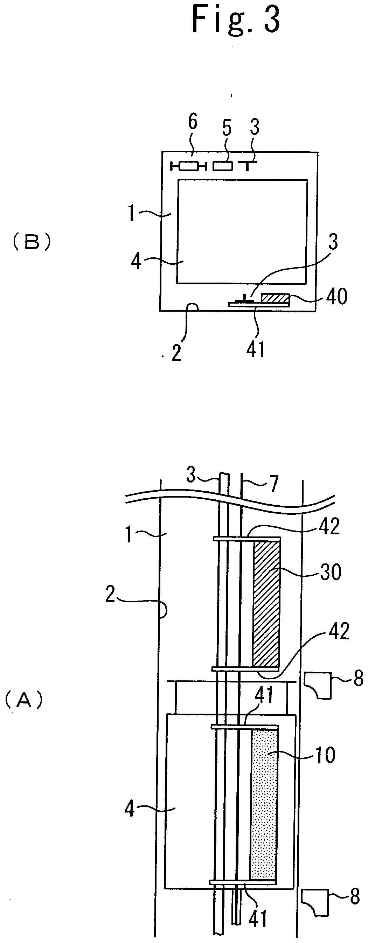

Figures 3(A) and 3(B) are views showing an example of an arrangement of an elevator system according the prior art. Figure 3(A) is a partial elevation of the elevator system as viewed from the horizontal direction, and Figure 3 (B) is a plan view of the elevator system as viewed from above, each being a conceptual diagram of essential parts of the elevator system.

In Figures 3(A) and 3(B), numeral 10 denotes a control device, which is concretely formed as a control panel. Numeral 30 denotes a power storage device, which is concretely formed as a power storage device panel. Numeral 41 denotes a pair of mounting arms. Each of the mounting arms is fixed to the guide rail 3 at an end and fixes the top and bottom ends of the control device (control panel) 10 at its tail ends. Incidentally,
for convenience of explanation, the control device and its hardware panel (control panel) are both denoted by numeral 10 and the power storage device and its panel (power storage device panel) are both denoted by numeral 30.

Numeral 42 denotes a pair of mounting arms. Each of the mounting arms is fixed to the guide rail 3 at an end, extends in a horizontal direction from the guide rail 3 along the shaft wall surface 2, and fixes the top and bottom ends of the power storage device panel 30 at its tail ends. The power storage device panel 30 is disposed between the shaft wall 2 and the car 4 in the vicinity of and immediately above the control panel 10. In this manner, the control panel 10 is disposed in a gap between the shaft wall surface 2 and the elevator car 4, and also the power storage device panel 30 is disposed in a gap between the shaft wall surface 2 and the elevator car 4, the two being attached to the guide rail 3 so as not to take up a special installation space. Because the construction of other parts is the same as in Figures 1(A) and 1(B), like numerals are given to these parts and their descriptions are omitted. Incidentally, because in the plan view of Figure 3(B) the control panel 10 and the power storage device panel 30 overlap each other, only the power storage device panel 30 is seen. The existing elevator equipment and the equipment to be newly added are separated and as shown in Figures 3(A) and 3(B), the power storage device 30 to be newly added is designed separately from the control device 10 as the power storage device panel. This power storage device panel 30 is installed in the vicinity of the control panel 10 in the upper part of the ascending/descending direction, preferably immediately above the control panel 10.

In a case where, for example, in Figures 3(A) and 3(B) the elevator control panel 10 is installed near the floor level of the lowest floor and the power storage device panel 30 is added to this elevator control panel, maintenance and inspection can be carried out from above the car 4 by installing the power storage device panel 30 in a position higher than the level of the car positioned on the floor level of the lowest floor. Also, it is also possible to install the power storage device panel 30 relatively near the control panel 10 without affecting the installation of other equipment of the elevator.

Furthermore, because the power storage device 30 is a separate panel, it is necessary for the control panel 10 only that equipment for wiring cables be additionally installed, and it is unnecessary to design a new control panel. In other words, it is necessary only that the power storage device panel 30 be designed as an option of the control panel 10.

Incidentally, in Figures 3 (A) and 3(B) is shown an example in which the power storage device 30 to be newly added is installed as the power storage device panel above the control panel 10. However, the power storage device 30 may be installed below the control panel 10 depending on the position of the control panel 10 in the shaft 1. In any case, usually there is no extra space within the shaft 1. However, above or below the control panel 10 there is a space to an extent which enables the control panel 10 to move upward and downward and it is advisable to use this space.

Therefore, in terms of arrangement space, it is convenient to design the width and depth, i.e., horizontal section of the power storage device panel 30 to almost the same degree as the width and depth of the control panel 10. And it is advisable to install the power storage device panel 30 immediately above or immediately under the control panel 10.

In a case where as in Embodiment 1 shown in Figures 1(A) and 1(B), the multiple panel 40 is formed by forming the control panel 10 integrally with the power storage device 30 by extending the length of the control panel 10 in the ascending/descending direction, if the height of the multiple panel 40 becomes too high, during maintenance and inspection work the worker's hands may sometimes not reach the multiple panel 40 without a stepladder etc., when the control panel 10 is installed near the floor level of the lowest floor, for example. In this case, the

Incidentally, in the case of an elevator which ascends and descends two floors or an elevator of short ascending/descending travel, there may sometimes be no sufficient space in the vertical direction of the control panel 10. In this case, it is appropriate to install the power storage device panel 30 in a vacant area of the space within the shaft, for example, to install the power storage device panel 30 in an appropriate place of the shaft wall 2 near the control panel 10, or to install the power storage device panel 30 in a pit in the lower part of the shaft 1, because it is unnecessary to redesign other equipment. As shown in Figures 3(A) and 3(B), the description was given of the case where the power storage device 30 including the power storage part 31, the charging/discharging circuit part 32, the measuring part 33 and the charging/discharging control part 34, which are the component parts shown in Figure 2, are formed as a whole in the form of one panel and installed immediately above the control panel 10 within the shaft 1.

However, even if not all of the component parts of the power storage device 30 are integrated as the power storage device panel, also in a case where at least one of the power storage part 31, charging/discharging circuit part 32, measuring part 33 and charging/discharging control part 34, or some of them are formed as one panel according to condition and necessity and installed immediately above or immediately under the control device 10 within the shaft.

### Embodiment 1

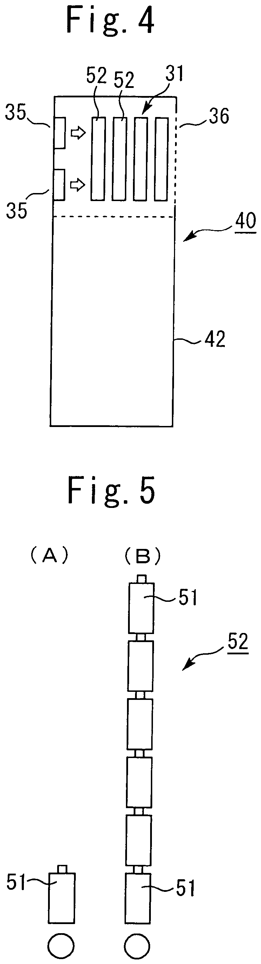

Figure 4 is a sectional view showing a rough construction of a composite panel including an elevator control device and a power storage device in Embodiment 1 of the invention. In Figure 4, numeral 40 denotes a multiple panel in which a control device 10 and a power storage device 30 are integrally built, numeral 42 a housing of the multiple panel, and numeral 31 a built-in power storage part. Numeral 52, as will be described later, denotes a power storage module in which unit cells for power storage are stacked in layer and electrically connected. In this manner, the power storage part 31 is constituted by a plurality of power storage modules 52 arranged in parallel.

Numeral 35 denotes an air blowing device such as a fan, which is arranged in order to make the temperature of the power storage part 31 uniform. The fan 35 is arranged integrally with the multiple panel 40 and fixed to the housing 42 of the multiple panel, for example.

It is necessary to make the temperature of the power storage part 31 as uniform as possible, and for example, as shown in Figure 4 the air blowing device 35 is arranged on the side of the power storage part 31 and air is blown toward the power storage part 31 (see the arrows in the figure). A blast is taken from the left side of Figure 4 into the air blowing device 35, draft-cools the power storage part 31 and is discharged from a ventilating window 36 on the right side of the housing 42.

Incidentally, in the above example, it was explained in Figure 4 that the air blowing device 35 is installed in the multiple panel 40. However, in a case where the control device 10 and the power storage device 30 are separately arranged, the air blowing device 35 is installed in the power storage device panel 30. In this case, the multiple panel 40 of Figure 4 may be regarded as the power storage device panel 30.

Next, a description will be given of the arrangement of cells for power storage of the power storage part 31 which is used in the present invention.

Figures 5(A) and 5(B) are drawings to describe the cells for power storage used in the invention. Figure 5(A) shows one unit cell 51 (also referred to as a power storage cell or simply as a cell in the invention). The upper side view shows a side view and the lower side view shows an end elevation (negative electrode side) of the bottom surface.

Figure 5(B) shows the power storage module 52 (also referred to simply as a module in the invention). With the positive and negative electrode sides of a multiple of cells 51 connected, the cells are longitudinally laminated and electrically cascade-connected. In the example shown in the figure, six cells 51 are connected and the upper side view shows a side view, and the lower side view shows an end elevation (negative electrode side) of the bottom surface. Incidentally, in Figure 5(B) is shown an example in which as a power storage module 52, a plurality of cells 51 are electrically connected in series in a simple manner. In general, however, the power storage module 52 may be formed by a combination of cascade connection and parallel connection of a plurality of cells 51.

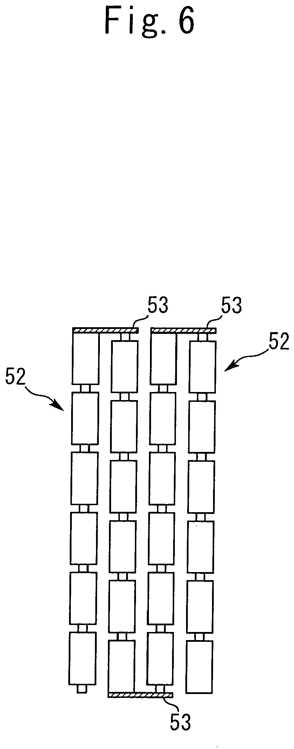

Figure 6 is a view showing an example of an arrangement of modules in the power storage part 31. In Figure 6, numeral 52 denotes a module, and numeral 53 denotes a bus bar for electrode connection. The bus bar 53 is a bar which electrically connects two cells 51 and also mechanically connects them at each of the top and bottom ends of the modules 52. In the example of Figure 6, four modules 52 are electrically cascade-connected. Incidentally, in Figure 6 is shown an example in which as the power storage part 31, a plurality of modules 52 are electrically cascade-connected in a simple manner. In general, however, the power storage part 31 may be formed by a combination of cascade-connection and parallel connection of a plurality of modules 52.

As batteries (cells) 51 for power storage such as secondary batteries used in the power storage part 31 of the power storage device 30, there are kinds such as a nickel- hydrogen battery and a lithium ion battery, and there are shapes such as a cylindrical shape and a rectangular shape. Also, as shown in Figure 4(B), there is a module in which five or six cells are connected in series.

In order to charge all the maximum regenerative power of an elevator to the power storage device 30, it is general practice to use a plurality of cells 51 or modules 52. There are various methods of determining the number of these cells 51 or modules 52 which depend on the speed and capacity of an elevator or a motor, etc. In general, however, to use cells 51 many enough to be able to charge all the maximum power during the regenerative running of an elevator is effective in terms of an increase in power efficiency. For example, it is advisable to use 40 cells (50W per unit cell) in an elevator of which the maximum regenerative power is about 2 kW.

As an example of a form of power storage part 31, a module of connected cells 51 was described above. However, for example, welding is used as the method of connecting such cells 51 and modules 52, and this method is good when the cells 51 are connected in a simple manner, however, there are cases where sufficient strength cannot be obtained. Therefore, for example, by installing modules 52, in which a plurality of cells 51 are connected, longitudinally in the vertical direction as shown in Figure 6, the modules can be installed without the application of a force which would bend the modules 52 due to the dead load of the batteries to connections.

For example, an inexpensive fan is used as the air blowing device 35 which blows air to the power storage part 31. Although there are various fans, there are available an axial fan, a line flow fan, a sirocco fan, etc. as general fans. The pressure loss of a blast is determined by the width and shape of the passage of the blast to be sent, the shape, arrangement method and arrangement intervals of the module 52 of the power storage part 31. It is necessary to determine and arrange an air blowing device 35 which is suited to a blast volume necessary for suppressing this pressure loss and a temperature rise in the power storage part 31.

Next, how to arrange the modules 52 in the power storage part 31, and the blast condition will be described.

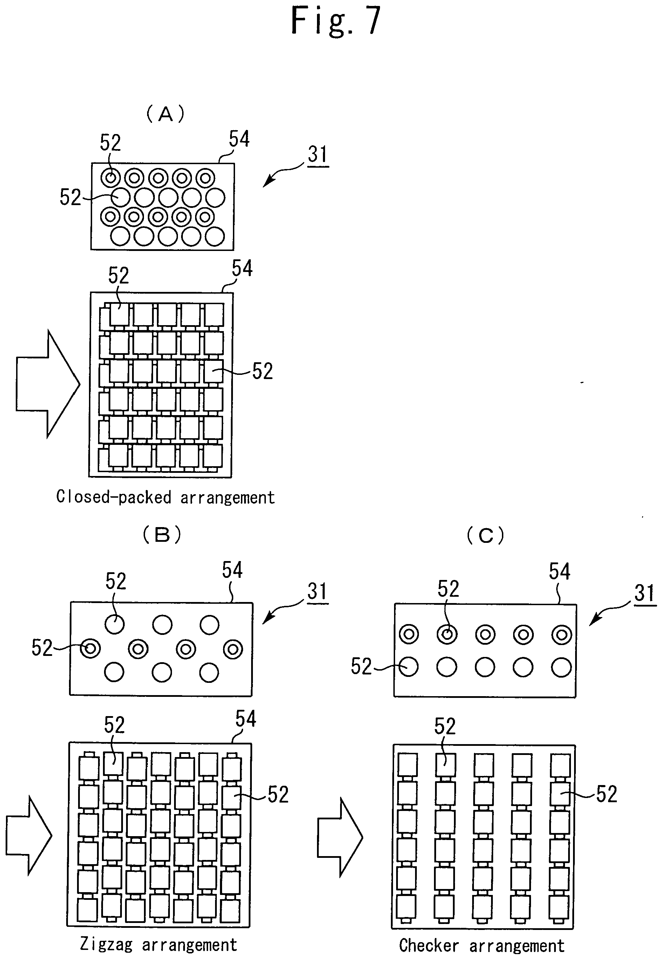

Figures 7(A) to 7(C) are views showing an example of arrangements of the modules in the power storage part 31. In each of Figures 7(A) to 7(C), the upper side view shows a top view and the lower side view shows a side view. In the upper side views, the double circles show the side where the positive electrodes of the cells exist, and the single circles show the side where negative electrodes of the cells exist. In Figures 7(A) to 7(C), numeral 52 denotes a module and numeral 54 denotes a housing wall surface of the power storage part 31. Incidentally, bus bars are omitted in the figures.

Figure 7(A) shows an example in which a plurality of modules 52 are densely arranged with hardly any gap in the power storage part 31. In this case, as the air blowing device 35, there is available a method of blowing air by use of a fan strong in pressure loss, such as a sirocco fan. However, in general, a sirocco fan is large in terms of the scale of a device and the noise is also large. In particular, in a fan installed within the shaft 1 as with a machineroom-less elevator, noise to within the car 4 poses a problem, and in a place where a room used by a person (people) and the elevator shaft 1 are adjacent to each other, making a loud noise is undesirable.

Figure 7(B) shows an example in which a plurality of modules 52 of the same shape are disposed in a zigzag arrangement. Figure 7(C) shows an example in which a plurality of modules 52 of the same shape are disposed in a checker arrangement. In both examples, the arrangement is performed so that the intervals between the adjacent nearest modules 52 become equal.

In the case where a plurality of modules 52 are arranged so closely that they almost come into contact with each other as in Figure 7(A), the pressure loss of air blowing increases. Therefore, in order to improve this, as shown in Figure 7(B) or Figure 7(C), it is possible to reduce the pressure loss of air blowing by giving a space between modules 52 to a certain extent. Furthermore, by arranging the modules 52 so as to make the gaps between them uniform, air is blown uniformly to the modules 52 or the cells 51. Particularly, when the system is formed by using a plurality of modules 52 of the same shape, air is blown uniformly in the case of the zigzag arrangement (Figure 5 (B)) or the checker arrangement (Figure 5(C)). Furthermore, in these cases, because of small pressure losses, sufficient air can be blown even by use of a fan not strong in pressure loss, such as an axial fan, and noise can also be abated to low levels.

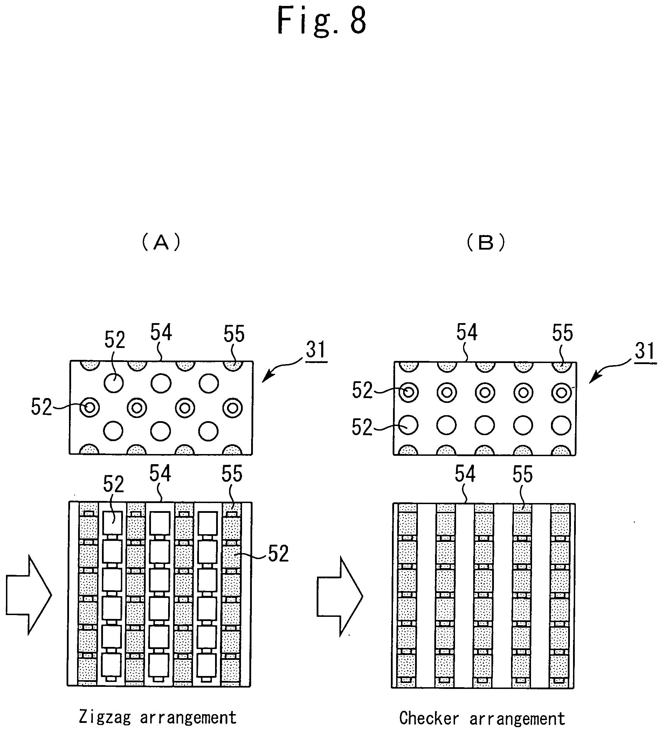

Figures 8(A) and 8(B) are views showing other examples of arrangements of the modules 52 for power storage. In each of Figures 8(A) and 8(B), the upper side view shows a top view and the lower side view shows a side view. In the upper side views, the double circles show the side where the positive electrodes of the cells exist, and the single circles show the side where negative electrodes of the cells exist.

In Figures 8(A) and 8(B), numeral 52 denotes a module, numeral 54 a housing wall surface, and numeral 55 a module dummy. The dummy 55 is a semi-cylinder or a semi-bar-like body having the same contour as the module 52 when it is longitudinally divided into two parts. The dummy 55 is arranged in such a manner that the plane thereof is placed against the wall surface 54 and its curved surface forms a given gap from an adjacent module 52. As a result of this, the distance between the modules 52, and the distance between the module 52 and the dummy 55, become equal. In other words, the arrangement of a combination of the modules 52 and the dummies 55 is made equal, or the mutual gap between the modules and the dummies is made equal.

As described above, in order to uniformly blow air to within the power storage part 31, it is effective to arrange the dummies 55 of the modules 52 to ensure that air is blown sufficiently also to the space between the power modules 52 without being blown to the wall surface 54 in an unbalanced manner as in Figures 7(A) to 7(C). It is necessary only that the dummy 55 be a dummy of the module 52 in terms of its contour. In this manner, by arranging something having the same shape as the module 52 or a shape similar to that of the module on the wall surface 54, it is ensured that not only the space between the modules 52, but also the space between the module and the wall surface 54 is made uniform. Alternatively, it is also conceivable to positively blow the air flowing by the wall to between the modules 52 by arranging something having the shape of a wing on the wall surface 54. This may be said to be a dummy in a broad sense.

In contrast, as in Figures 7(A) to 7(C), when, for example, only the modules 52 having the same shape of a cylinder are arranged in a space enclosed by planer wall surfaces, the blown air flows mainly along the planer wall side. Therefore, the space between the modules 52 is not sufficiently blown by the air, and heat is apt to accumulate there. This applies also to a case where the horizontal section of the module 52 is not limited to a circular form. To prevent this, the blowing of the air flowing between the modules 52 can be made uniform by arranging the dummies 55 on the wall surface 54 as shown in Figures 8(A) and 8(B).

There is a secondary battery as an example of the battery (cell) 51 for power storage. However, the charging/discharging efficiency of a secondary battery is influenced by temperature. For example, in the case of a nickel-hydrogen battery, the temperature at which the battery can be used is 0 to 40°C, and the temperature which ensures a good charging/discharging efficiency is 20 to 30°C, the discharging efficiency is bad at temperatures of 0 to 20°C, and the charging efficiency is bad at 30 to 40°C. For this reason, at temperatures of not less than 30°C, it is desirable to cool a nickel-hydrogen battery.by blowing air by use of the air blowing device 35, such as a fan.

When a plurality of cells 51 or modules 52 are used, it is necessary to make each of the temperature of the cells 51 or modules 52 as uniform as possible. The reason is as follows: for example, it is assumed that in the case of the use of nickel-hydrogen batteries, two nickel-hydrogen cells A and B are connected in series to perform charging/discharging. When Cell A is at a high temperature and Cell B is at a low temperature, the charging efficiency of Cell A is bad and the discharging efficiency of Cell B is bad. As a result of charging/discharging, the quantity of charged current of Cell A becomes smaller than that of Cell B and charging/discharging is nonuniform. Therefore, it is difficult to grasp the quantity of charged current as the whole system and only a certain cell performs overcharging and overdischarging, with the result that a deterioration of the device is caused by the overcharging and overdischarging. In contrast, problems of this kind can be solved by taking measures as described above.

As described above, in an elevator system provided with the power storage device 30 which stores DC power, by using an appropriate number of cells 51 and modules 52, it is possible to form the power storage device 30 having an appropriate capacity and it is possible to obtain the power storage device 30 having an air blowing method with low noise and a good air blowing efficiency. The whole of the power storage device 30 including the air blowing device 35, or at least one of the power storage part 31, charging/discharging circuit part 32, measuring part 33, charging/discharging control part 34 and air blowing part 35 of the power storage device 30, or some of them, are formed integrally with the control panel 10. The whole of the power storage device 30 including the air blowing device 35 or at least one of the power storage part 31, charging/discharging circuit part 32, measuring part 33, charging/discharging control part 34 and air blowing part 35 of the power storage device 30, or some of them, are formed separately from the control panel 10 and installed within the shaft 1.

### Embodiment 2

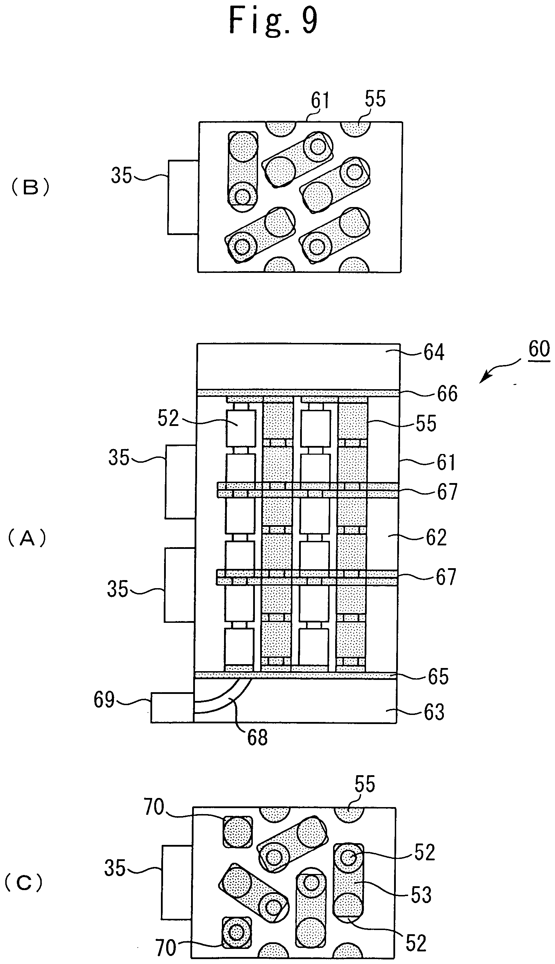

Figures 9(A) to 9(C) are views showing the construction of power storage units used in the power storage part in Embodiment 2 of the invention. Figure 9(A) shows a side view, Figure 9(B) shows a plan view, and Figure 9(C) shows a bottom view.

In Figures 9(A) to 9(C), numeral 60 denotes a power storage unit (also referred to simply as a unit in the present specification), numeral 61 a housing of the power storage unit, numeral 62 a module chamber, numeral 63 a lower space, and numeral 64 an upper space. Numeral 65 denotes a lower base plate, which provides a partition wall separating the module chamber 62 and the lower space 63 from each other. Numeral 66 denotes an upper base plate, which provides a partition wall separating the module chamber 62 and the upper space 64 from each other. Numeral 67 denotes a supporting member which supports and fixes a module 52, such as a support plate, numeral 68 a wire for power transmission, and numeral 69 a connector for power transmission. Numeral 35 denotes an air blowing device.

In the module chamber 62 are arranged a plurality of modules 52, which are vertically placed and disposed at given intervals. The top and bottom of the modules are fixed by the upper base plate 66 and the lower base plate 65. As necessary, a plurality of dummies 55 are arranged on the wall surface of the housing 61. As shown in Figures 9(B) and 9(C), adjacent modules 52 are electrically and mechanically connected by a bus bar 53 to the top surface and bottom surface of the modules 52, whereby a series circuit of modules 52 is formed. As shown in Figure 9(C), a terminal 70 for connection to the outside is connected to each of the modules 52 of a series circuit at two ends.

The terminal 70 is connected to the connector 69 by the wire 68, and the transmission of power to the outside is performed. The connector 69 is structurally protected by means of a protection box or a finger protector. The power transmission member comprises the terminal 70, wire 68, connector 69, etc.

This power storage unit 60 is provided with component elements necessary for fulfilling the function as a power storage part 31 by itself , and is unitized in accordance with prescribed specifications.

The required power of an elevator changes depending on the speed and capacity of the elevator. In association with this, the capacity of the power storage part 31 also changes, and the required number of cells 51 and modules 52 also changes. However, if unitization is performed by a necessary minimum number of cells 51 or an optimum number of cells 51, and the number of cells to be used is determined by a multiple of this number, it is possible to adapt to an elevator system of required power by increasing the number of units of the same shape. Therefore, units can be shared and design and management become easy.

If a prescribed number of modules 52 are formed as one unit 60 like this, it is possible to replace the whole unit 60 when the cells 51 have reached the end of their life cycle, and this is convenient. For example, when about 10 modules constitute one unit, the work efficiency of battery replacement, for example, is better than the replacement work of each piece of modules 52.

In general, life and deterioration are conceivable for power storage batteries, such as nickel-hydrogen batteries. Also in the case of nickel-hydrogen batteries, the life of nickel-hydrogen batteries is generally shorter than the mechanical life of an elevator. Therefore, work such as maintenance, inspection and replacement of batteries for power storage generally occurs. Hence, if a unit 60 as described above is formed, the work efficiency is better than the replacement work of each piece of modules 52.

If as a preferred example of power storage unit 60, power transmission members are unitized to form such a structure that the charging parts of the power transmission members are incapable of being directly touched, the transportation efficiency is good and safety during transportation, maintenance, inspection and replacement can also be ensured.

Also, if as a preferred example of power storage unit 60, a wiring board, such as a large-current board is used as the base plate 65, this wiring board can be used in power transmission. Also, the modules 52 etc. can be fixed for example by screw cramping by use of a large-current board. Furthermore, assembling work can be easily performed with relatively low cost, and it is possible to easily arrange the modules 52 in determined positions.

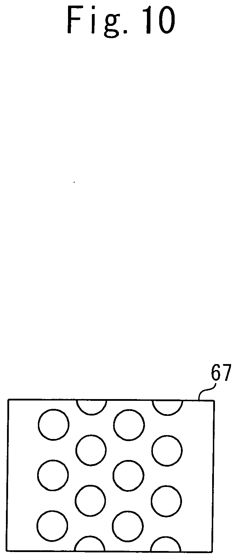

Also, as a preferred example of power storage unit 60, the modules are supported and fixed by the supporting member 67, as shown in Figure 9 (A). Figure 10 shows a plan view of the supporting plate 67 as an example of supporting member. This supporting plate is a plate member in which round holes are made in places where the modules 52 and dummies 55 pass. In this manner, the module supporting member 67 is fabricated in plate form and as shown in Figure 9, an end of the supporting plate 67 is connected to the housing 61 so that the supporting plate 67 is disposed parallel to the air blowing direction of the air blowing device 35.

As described above, in a case where the module 52 is fabricated by connecting cylindrical nickel-hydrogen cells, for example, the strength of the connections is not sufficient. When the nickel-hydrogen cells are vertically stacked in the longitudinal direction of the cells, the strength of the connections is enough after the installation, however, because loads are applied to the connections during the transportation, it is necessary to enhance the connections. For this reason, it is possible to increase the support strength by using a module supporting plate 67 as shown in Figures 9 and 10 to support the module 52.

Also, as shown in Figure 9, by fixing the supporting plate 67 in the horizontal direction, the cells 51 can be supported without greatly blocking the air blown in the horizontal direction from the air blowing device 35.

Furthermore, as shown in Figure 9, by adjusting the position of the air blowing device 35 and the position of the supporting plate 67 so that the air from the air blowing device 35, such as a cooling fan, flows along the supporting plate 67, it is possible to blow air in a concentrated manner to the portions where the heat of the modules 52 concentrates relatively greatly. Therefore, the temperature of the plurality of modules 52 or cells 51 within the power storage unit 60 can be made uniform to a greater extent.

When the supporting plate 67 is fabricated from a material of high thermal conductivity, such as iron and aluminum, the supporting plate itself performs the function of a cooling f an and the cell cooling efficiency increases. When the supporting plate 67 is fabricated from an electrically nonconductive material, such as resin, the electrically insulating strength is improved by the unitization of a plurality of cells and unitization can be safely performed.

Also, as a preferred example of the power storage unit 60, the air blowing device 35 is built in the above-described unit 60 and fixed thereto. By combining the air blowing device 35, it is possible to easily make the air blasting structure and sealing structure of the unit 60. As a result of this, it is also possible to easily fix the positional relation to the module 52, and this produces the merit that air can be uniformly blown to the modules 52.

For example, for an axial fan, the noise value increases in a case where an object is present before and behind the fan at a close distance of, for example, about 20 mm. By attaching the air blowing device 35 to the unit 60, it is possible to ensure that a certain distance can be maintained between the air blowing device 35 and the module 52 and hence it is possible to obtain a structure with abated noise.

Also, as a preferred example of the power storage unit 60, the temperature of the module 5 2 is measured by disposing a temperature detector 72 in the module 52 within the unit 60. It is made possible that the voltage in each of the modules 52 can be measured and information transmission means which transmits the temperature and voltage in each of the modules 52 to the outside is provided. This is because it is necessary to measure the temperature and voltage of the cells 51 or modules 52 in order to precisely control the electric energy of the unit 60 in which a plurality of nickel hydrogen cells, for example, are used.

It is possible to use the wiring on the base plates 65, 66 shown in Figure 9 as information transmission members which transmit information on measured temperature, voltage, etc. With the aid of this wiring, the information on the modules 52 can be grasped by simple connection. By forming the power transmission member and information transmission member on the same base plate 65, it is also possible to adopt the construction of an integrated base plate.

As described above, temperature is necessary in order to uniformly control the quantity of charged current in a plurality of cells 51. For temperature measurement, in a case where the power storage part 31 is unitized and it is possible to uniformly blow air by using the air blowing device 35, within the unit 60 there are points of the module 52 at which a maximum temperature and a minimum temperature are reached. This case provides the merit that a maximum variation in the temperature of the module 52 can be grasped by measuring the temperature of the module 52 at least at the two points.

Voltage is necessary for monitoring the overcharging and overdischarging of the cell 51. In particular, when the number of cells 51 increases, it is safer to monitor overcharging and overdischarging for each cell 51 or for each group of a prescribed number of cells 51. It is assumed that for example, when 100 cells 51 are used, the steady-state voltage of a single cell 51 is 1.2 V. Then, the total voltage at this time is 120 V. It follows that when charging is performed, the voltage of a single cell 51 is 1.6 V and the total voltage is 160 V. However, if one cell 51 is abnormal in a steady state and is overcharged, the total voltage is only 120.4 V. That is, it is impossible to judge an abnormality in a single cell 51 if the total voltage alone is monitored.

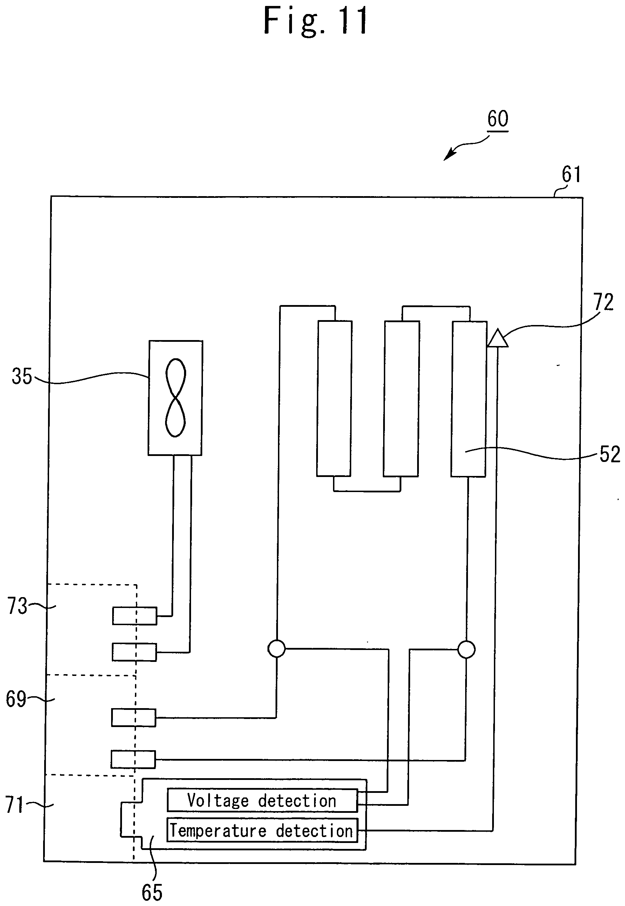

Figure 11 is a diagram to explain an example of a configuration of an electric circuit of the power storage unit 60 constructed as described above. As shown in Figure 11, both ends of modules 52 which are electrically connected, in this example cascade-connected, are connected to the connector 69 of the power transmission part.

Wires are drawn for voltage detection from both ends of a plurality of electrically connected modules 52, and connected to a voltage and temperature detection terminal 71. In this figure, wires to detect the voltage at both ends of all modules 52 are shown. However, outgoing wires can be installed so that the voltage of each of the modules 52 is detected (omitted in the figure).

A temperature detector 72 is arranged in an appropriate position of the module 52 and connected to the voltage and temperature detection terminal 71. Although in this figure only one temperature detector 72 is shown, it is possible to install at least two or multiple temperature detectors 72 in appropriate two or multiple places (omitted in the figure).

A terminal 73 which sends power to the air blowing device 35 is also installed.

As described above, according to this embodiment, it is possible to unitize the power storage part 31 by using batteries such as secondary batteries and the power storage part 31 can be easily transported, maintained, inspected and replaced. According to the required power of an elevator, it is possible to provide the desired power storage device 30 by using a required number of units 60 of the same specifications.

### Industrial Applicability

Because the present invention is configured as described above, effects as described below are provided.

According to the invention, it is possible to construct an elevator which facilitates a reduction of cables and the maintenance and inspection of the cables by arranging a power storage device using secondary batteries etc. , or at least a part of the power storage device in appropriate positions within a shaft without impairing the space-saving merit of machineroom-less elevators.

Also, it is possible to efficiently cool the power storage device using secondary cells etc. while abating noise as far as possible.

Furthermore, the power storage part can be easily transported, maintained, inspected and replaced by unitizing the power storage part using secondary batteries etc.

## Claims

1. An elevator system comprising a control panel (10) including a converter (12) for rectifying AC power and outputting the DC power to a DC bus (13), and an inverter (14) connected to said DC bus (13) and converting said DC power to variable voltage variable frequency AC power, and operating an elevator car (4) by driving an electric motor by an output of said inverter (14), **characterized in that** the elevator system includes a power storage device (30) comprising:
a power storage part (31) storing power from said DC bus (13) and discharging power to said DC bus (13);
a charging/discharging circuit part (32) connected between said DC bus (13) and said power storage part (31);
a measuring part (33) for measuring at least one kind selected from a temperature of said power storage part (31) or an input/output current or voltage thereof ; and
a charging/discharging control part (34) for controlling the charging/discharging of said power storage part (31) by controlling said charging/discharging circuit part (32) according to an output of said measuring part (33), and an air blowing part (35) for blowing air to said power storage part (31),
wherein said control panel (10) is provided within an elevator shaft (1) and said power storage device (30) or at least the power storage part (31) among the power storage part (31), charging/discharging circuit part (32), measuring part (33), charging/discharging control part (34) and air blowing part (35) of said power storage device (30) is provided integrally with said control panel (10).

2. The elevator system according to claim 1, **characterized in that** the power storage part (31) of said power storage device (30) includes a plurality of power storage modules (52) in which a plurality of power storage cells (51) are electrically connected and stacked in layer and is constituted by a power storage unit (60) in which a plurality of said power storage modules (52) are arranged in parallel and electrically connected.

3. The elevator system according to claim 2, **characterized in that** the power storage part (31) of said power storage device (30) is constituted by said power storage unit (60) the number of which is one or a plurality of said power storage units (60) connected.

4. The elevator system according to claim 2, **characterized in that** said power storage unit (60) is constituted by a plurality of said power storage modules (52) which are horizontally arranged in a checker pattern or in a zigzag pattern.

5. The elevator system according to claim 2, **characterized in that** in said power storage unit (60), a horizontal ventilation passage is uniformized by arranging said power storage modules (52) along with dummies (55).

6. The elevator system according to claim 2, **characterized in that** said power storage unit (60) comprises a power transmission member able to take out the power of a plurality of said power storage modules (52) electrically connected to outside said power storage unit (60).

7. The elevator system according to claim 2, **characterized in that** said power storage unit (60) comprises an information transmission member for transmitting information on the temperature or voltage of the power storage modules (52).

## Patentansprüche

1. Fahrstuhlsystem mit einem Bedienfeld (10), das einen Gleichrichter (12) zum Gleichrichten von Wechselstrom und zum Ausgeben von Gleichstrom an einen Gleichstrombus (13) und einen mit dem Gleichstrombus (13) verbundenen Wechselrichter (14) zum Wechselrichten des Gleichstroms in Wechselstrom mit unterschiedlicher Spannung und unterschiedlicher Frequenz aufweist, und Betreiben eines Fahrstuhlkorbs (4) durch antreiben eines Elektromotors durch die Leistung des Wechselrichters (14), **dadurch gekennzeichnet, dass** das Fahrstuhlsystem eine Stromspeichereinrichtung (30) aufweist, die umfasst:
ein Stromspeicherteil (31), das Strom von dem Gleichstrom-Bus (13) speichert und Strom zu dem Gleichstrom-Bus (13) entlädt;
ein zwischen dem Gleichstrom-Bus (13) und dem Stromspeicherteil (31) geschaltetes Lade-/Entlade-Schaltungsteil (32);
ein Messteil (33) zum Messen mindestens einer Art, ausgewählt aus einer Temperatur des Stromspeicherteils (31) oder eines Eingangs/Ausgangsstroms oder einer Spannung davon; und
ein Lade-/Entlade-Steuerteil (34) zum Steuern des Ladens/Entladens des Stromspeicherteils (31) durch Steuern des Lade-/Entlade-Schaltungsteils (32) gemäß einem Ausgang des Messteils (33), und ein Luftblasteil (35), um Luft zu dem Stromspeicherteil (31) zu blasen,
wobei das Bedienfeld (10) innerhalb eines Fahrstuhlschachts (1) vorgesehen ist und die Stromspeichereinrichtung (30) oder zumindest das Stromspeicherteil (31) unter dem Stromspeicherteil (31), dem Lade-/Entlade-Schaltungsteil (32), dem Messteil (33), dem Lade-/Entlade-Steuerteil (34) und dem Luftblasteil (35) der Stromspeichereinrichtung (30) integral mit dem Bedienfeld (10) vorgesehen ist.

2. Fahrstuhlsystem nach Anspruch 1, **dadurch gekennzeichnet, dass** das Stromspeicherteil (31) der Stromspeichereinrichtung (30) eine Vielzahl von Stromspeichermodulen (52) aufweist, in denen eine Vielzahl von Stromspeicherzellen (51) elektrisch miteinander verbunden und in Schichten gestapelt sind und aus einer Stromspeichereinheit (60) besteht, in der eine Vielzahl der Stromspeichermodule (52) parallel angeordnet und elektrisch verbunden ist.

3. Fahrstuhlsystem nach Anspruch 2, **dadurch gekennzeichnet, dass** das Stromspeicherteil (31) der Stromspeichereinrichtung (30) durch die Stromspeichereinheit (60) ausgebildet ist, deren Anzahl eine oder eine Vielzahl von angeschlossenen Stromspeichereinheiten (60) ist.

4. Fahrstuhlsystem nach Anspruch 2, **dadurch gekennzeichnet, dass** die Stromspeichereinheit (60) aus einer Vielzahl von Stromspeichermodulen (52) besteht, die horizontal in einem Schachbrettmuster oder in einem Zickzackmuster angeordnet sind.

5. Fahrstuhlsystem nach Anspruch 2, **dadurch gekennzeichnet, dass** in der Stromspeichereinheit (60) ein horizontaler Belüftungskanal durch Anordnen der Stromspeichermodule (52) zusammen mit Dummies (55) vereinheitlicht ist.

6. Fahrstuhlsystem nach Anspruch 2, **dadurch gekennzeichnet, dass** die Stromspeichereinheit (60) ein Stromübertragungselement umfasst, das in der Lage ist, den Strom einer Vielzahl von Stromspeichermodulen (52) nach außen zu leiten und elektrisch mit der Außenseite der Stromspeichereinheit (60) verbunden ist.

7. Fahrstuhlsystem nach Anspruch 2, **dadurch gekennzeichnet, dass** die Stromspeichereinheit (60) ein Informationsübertragungselement zum Übertragen von Informationen über die Temperatur oder Spannung der Stromspeichermodule (52) umfasst.

## Revendications

1. Système d'ascenseur comprenant un tableau de commande (10) comportant un transformateur (12) pour redresser un courant alternatif et sortir le courant continu vers un barre omnibus pour courant continu (13), et un onduleur (14) connecté à ladite barre omnibus pour courant continu (13) et transformant ledit courant continu en un courant alternatif à fréquence variable et à tension variable, et en faisant fonctionner une cabine d'ascenseur (4) en pilotant un moteur électrique par une sortie dudit onduleur (14), **caractérisé en ce que** le système d'ascenseur comporte un dispositif de stockage d'énergie (30) comprenant :
une section de stockage d'énergie (31) stockant l'énergie provenant de ladite barre omnibus pour courant continu (13) et déchargeant l'énergie vers ladite barre omnibus pour courant continu (13) ;
une section formant circuit de charge/décharge (32) connectée entre ladite barre omnibus pour courant continu (13) et ladite section de stockage d'énergie (31) ;
une section de mesure (33) pour mesurer au moins une donnée choisie parmi une température de ladite section de stockage d'énergie (31) ou un courant d'entrée/sortie ou une tension de celle-ci ; et
une section de commande de charge/décharge (34) pour commander la charge/décharge de ladite section de stockage d'énergie (31) en commandant ladite section formant circuit de charge/décharge (32) en fonction d'une sortie de ladite section de mesure (33), et une section de soufflage d'air (35) pour souffler de l'air sur ladite section de stockage d'énergie (31),
dans lequel ledit tableau de commande (10) est agencé à l'intérieur d'une gaine d'ascenseur (1) et ledit dispositif de stockage d'énergie (30) ou au moins la section de stockage d'énergie (31) parmi la section de stockage d'énergie (31), la section formant circuit de charge/décharge (32), la section de mesure (33), la section de commande de charge/décharge (34) et la section de soufflage d'air (35) dudit dispositif de stockage d'énergie (30) est agencé d'un seul tenant avec ledit tableau de commande (10).

2. Système d'ascenseur selon la revendication 1, **caractérisé en ce que** la section de stockage d'énergie (31) dudit dispositif de stockage d'énergie (30) comporte une pluralité de modules de stockage d'énergie (52) dans lesquels une pluralité de cellules de stockage d'énergie (51) sont électriquement connectées et empilées en couches et sont constituées par une unité de stockage d'énergie (60) dans laquelle une pluralité desdits modules de stockage d'énergie (52) sont disposés en parallèle et connectés électriquement.

3. Système d'ascenseur selon la revendication 2, **caractérisé en ce que** la section de stockage d'énergie (31) dudit dispositif de stockage d'énergie (30) est constituée par ladite unité de stockage d'énergie (60) dont le nombre est égal à un ou à une pluralité desdites unités de stockage d'énergie (60) connectées.

4. Système d'ascenseur selon la revendication 2, **caractérisé en ce que** ladite unité de stockage d'énergie (60) est constituée par une pluralité desdits modules de stockage d'énergie (52) qui sont disposés horizontalement selon un motif en damier ou selon un motif en zigzag.

5. Système d'ascenseur selon la revendication 2, **caractérisé en ce que**, dans ladite unité de stockage d'énergie (60), un passage de ventilation horizontal est uniformisé en disposant lesdits modules de stockage d'énergie (52) conjointement avec des éléments factices (55).

6. Système d'ascenseur selon la revendication 2, **caractérisé en ce que** ladite unité de stockage d'énergie (60) comprend un élément de transmission d'énergie apte à extraire l'énergie d'une pluralité desdits modules de stockage d'énergie (52) électriquement connectés à l'extérieur de ladite unité de stockage d'énergie (60).

7. Système d'ascenseur selon la revendication 2, **caractérisé en ce que** ladite unité de stockage d'énergie (60) comprend un élément de transmission d'information pour transmettre une information au sujet de la température ou de la tension des modules de stockage d'énergie (52).
